# EUROPEAN PATENT APPLICATION

(11) **EP 0 819 659 A2**
(43) Date of publication of application: **21.01.1998**
(21) Application number: 97202256.0
(22) Date of filing: 18.07.1997
(51) Int. Cl.: C03C 25/02, C03C 13/04, G02B 6/16, G02B 1/04

(54) **Hybride glass-polyimide optical waveguide and method for manufacturing this optical waveguide**

(30) Priority: 19.07.1996 NL 1003651
(71) Applicant: NEDERLANDSE ORGANISATIE VOOR TOEGEPAST-NATUURWETENSCHAPPELIJK ONDERZOEK TNO, 2628 VK Delft (NL)
(72) Inventor: Faber, Anne Jans, 5508 MP Veldhoven (NL); Göschel, Albin Günter Peter Ulrich, 5655 JA Eindhoven (NL)
(74) Representative: Smulders, Theodorus A.H.J., Ir.

(57) **Abstract**

An optical waveguide such as an optical fiber (1) is described, having a hybride structure, formed by a core (2) of a chalcogenide or halide glass and an optically transparent fluorinated polyimide cladding (3). The core (2) can be doped with Pr in order to obtain an optical amplifier for the wavelength region around 1.3 µm.

Also, a method is described for manufacturing this optical fiber (1). A core-preform (12) and a cladding-precursor (13) are provided and subsequently pulled to form the eventual fiber, wherein the cladding-precursor (13) consists of a not-fully imidised polyimide, which imidises fully during the pulling process.

## Description

The invention relates to an optical waveguide and to a method for manufacturing this optical waveguide.

Further, the invention relates to an optical amplifier and to a method for manufacturing an optical amplifier.

An important example of an optical waveguide is an optical fiber, and the invention will hereinafter be further explained with respect to an optical fiber. However, the invention is also applicable to other types of optical waveguides, such as planar optical waveguides.

In the field of telecommunication, the optical fiber nowadays takes an important place. It is a general purpose of the present invention to provide an optical fiber with improved properties. A special purpose of the present invention is to provide a single mode optical fiber with less attenuation over a larger wavelength range, especially in the infrared range (1-12 µm).

When an optical signal is transmitted through an optical fiber, attenuation will always occur to a certain extent, such that it is necessary to amplify the signal after a certain distance (typically in the order of ca. 50-100 km).
Conventionally, for that purpose an electronic amplifier is used. At the amplifier station the optical signal must then be converted into an electrical signal, which is amplified in an electronic amplifier, after which the amplified electric signal is converted back into an optical signal. Not only this involves the disadvantage that an amplifier station has a rather complicated structure with rather a large number of parts, among which optical/electrical converters and electrical/optical converters, but also does this imply that the bandwidth and bit-rate of the overall system is limited by the electronic components.

Therefore, optical fiber amplifiers have recently been developed, i.e. fiber amplifiers which do not need a conversion to an electrical signal.

Nowadays, fused silica (SiO₂) as material for optical fibers can be regarded as being standard. The absorption coefficient of this material, and thus also the attenuation, exhibits two important minima as a function of the wavelength which are useful for signal transmission, namely in a first range around ca. 1.3 µm and in a second range around ca. 1.55 µm. Optical fiber amplifiers known at present are based on the use of trivalent rare earth ions in the fiber material.

For said second wavelength range, Erbium-doped (Er) SiO₂-based fiber material has proved to be adequate. For said first wavelength range, research is done to the use of Praseodymium (Pr), but in combination with oxide-glasses such as SiO₂ this does not provide a useful result. For efficient fiber amplifiers, so-called low phonon energy glass compositions are needed; examples include chalcogenide and halide glass compositions. Nowadays, Praseodymium-doped fluoride-glass fibers are commercially available, usually based on ZBLAN (ZrF₄ - BaF₂ - LaF₃ - AlF₃ - NaF), which can be used as optical amplifier for 1.3 µm, indeed.

It is a special purpose of the present invention to provide an optical amplifier which operates in said first range (1.3 µm), and which is based on a material different from ZBLAN. More specifically, the present invention aims to provide an optical fiber amplifier for 1.3 µm which has an improved pump efficiency as compared to the known ZBLAN fiber amplifier, and which has a very low damping of preferably less than 0.1 dB/m in the wavelength region around 1.3 µm.

Also, it is a special purpose of the present invention to provide an infrared transmitting fiber which has a very low damping of preferably less than 0.1 dB/m in the wavelength region around 1.3 µm.

Further, the present invention aims to provide a relatively simple and relatively cheap method for manufacturing an optical fiber and/or an optical fiber amplifier with excellent properties, wherein especially the properties of the interface between the core and the cladding are of importance. In a known method for manufacturing special optical fibers, a cylinder is prepared as preform for the cladding, a bar is prepared as preform for the core, and said bar is placed in said cilinder, after which the combination is heated and pulled to obtain a fiber. In such a method, it is difficult to avoid interface defects.

In the following, the invention will be further explained by description of a preferred embodiment of an optical fiber in accordance with the invention with reference to the drawing, in which:
figure 1 shows a cross-section of an optical fiber; and
figure 2 illustrates a process for manufacturing an optical fiber.

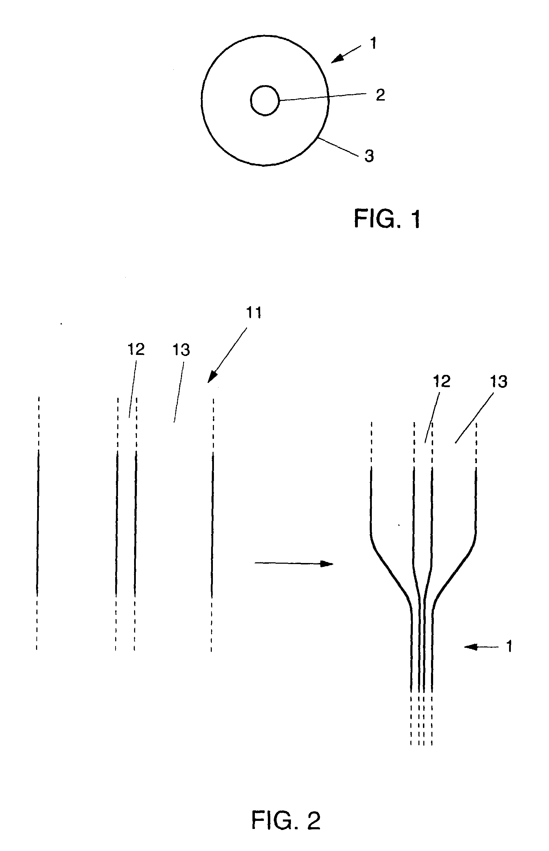

Figure 1 is a cross-section of a single-mode optical fiber 1 with a core 2 and a cladding 3. The core 2 typically has a diameter in the order of about 2-10 µm, while the cladding 3 typically has a thickness in the order of about 125 µm. The cladding 3 has an index of refraction n₃ which is a little lower than the index of refraction n₂ of the core 2: preferably, n₂-n₃ is about 1% of the value of n₂.

An important aspect of the present invention is based on the insight that the cladding material does not only need to be chosen in regard to its index of refraction n₃, which should be lower than the index of refraction n₂ of the core 2, but also in regard to its optical properties, such as for instance the absorption properties. The guidance of electromagnetic waves along the fiber takes place primarily in the core 2, indeed, but nevertheless a part of the wave (evanescent wave) will penetrate a certain depth into the cladding 3. Therefore, the cladding material is chosen to have as little absorption as possible, which is indicated as "optically low-loss", which is an indication which is clear to a person skilled in the art. Preferably, the loss of the total core/cladding structure is less than 0.1 dB/m in the IR-range.

Further, the invention is based on the insight that the interface between the core 2 and the cladding 3 should have as little defects as possible, and that the cladding 3 should have as little defects as possible.

According to an important aspect of the present invention, the core 2 is made from an inorganic glass, for instance a chalcogenide glass, a halide glass or a chalcohalide glass, which, in order to obtain an optical fiber amplifier, can be doped with Pr, whereas the cladding 3 is made from an optically transparent polymer, especially a fluorinated polyimide.

Figure 2 illustrates a method proposed according to the present invention for manufacturing such an optical fiber 1 or fiber amplifier, respectively. In a first step, a bar-shaped preform 12 for the core 2 is provided, said preform 12 being made from a suitably chosen inorganic glass, preferably a chalcogenide glass, which can be suitably doped with Pr. The material of the core preform 12 is chosen to have a melting range below 1000 °C, such that the material is indicated as low-melting, and to have a fiber pulling temperature T_{f} in the range of 200-600 °C, preferably in the range of 250-450 °C.

Around the core preform 12, a cladding preform 13 is arranged, which in accordance with an important aspect of the present invention is made of a material which acts as precursor of the eventual cladding material. Suitably, the material of the cladding preform 13 is a not fully imidised polyimide.

Finally, the eventual fiber 1 is formed by pulling the combined preform 11 at an elevated temperature (in the order of about 250-450 °C) until the formed product has the desired dimensions. According to an important aspect of the present invention, during this pulling process the imidisation of the cladding precursor is completed. According to the insights of the invention, this offers important advantages. In the first place, a good bonding between the core 2 and the cladding 3 is achieved. In the second place, the cladding material will show no defects, because the polyimide of the cladding 3 in its final imidised condition is not subjected any more to mechanical stress by changes in the length. In the third place, by chosing a suitable combination of the process parameters, such as temperature and time of pre-imidisation, temperature during pulling, and relative change in length during pulling, the refraction index n₃ of the cladding 3 can be optimise to a suitable and desired value in relation to the refraction index n₂ of the core 2.

The method according to the present invention is a very efficient and relatively cheap method for manufacturing an optical fiber with excellent properties, which is also applicable in manufacturing other special IR-transmitting fibers.

It will be clear to a person skilled in the art that it will be possible to make modifications to the described examples without departing from the scope of the invention as described in the claims. For instance, it is possible that the fiber is a multi-mode fiber.

## Claims

1. Optical waveguide, especially an optical fiber (1), having a hybride core/cladding structure, in which the core (2) is made from a low-melting inorganic glass and the cladding (3) is made of an optically transparent fluorinated polyimide which is resistant to relatively high temperatures.

2. Single mode optical waveguide according to claim 1, wherein the core (2) consists of a low phonon energy glass (e.g. chalcogenide or halide), doped with praseodymium ions such that the waveguide can function as an optical amplifier in the wavelength region in the neighbourhood of about 1.3 µm.

3. Optical waveguide according to claim 1 or 2, wherein the core (2) is made from a chalcogenide glass, a halide glass or a chalcohalide glass.

4. Optical waveguide according to any of the preceding claims, with low optical attenuation of less than 2 dB/m, preferably less than 0.1 dB/m in the wavelength region around 1.3 µm and/or in the wavelength region around 1.55 µm.

5. Optical waveguide according to any of the preceding claims, wherein the refraction index n₃ of the cladding (3) is a little, preferably at least 1%, smaller than the refraction index n₂ of the core (2).

6. Optical waveguide according to any of the preceding claims, wherein the core (2) has a diameter of about 2-10 µm and the cladding (3) has a thickness of about 125 µm.

7. Method for manufacturing a optical waveguide (1) having a core/cladding structure, wherein the cladding (3) comprises a polyimide, the method comprising the steps of:
providing a core-preform (12);
providing a not-fully imidised polyimide as cladding precursor on the core-preform;
and pulling the combined materials (12, 13) at a suitable temperature to the eventual fiber (1), wherein said precursor imidises substantially completely.

8. Method according to claim 7, wherein the cladding material has a glass-transition temperature higher than the pulling temperature of the core material.
